# EUROPÄISCHE PATENTSCHRIFT

(11) **EP 1 334 849 B1**
(45) Veröffentlichungstag und Bekanntmachung des Hinweises auf die Patenterteilung: **08.02.2006**
(21) Anmeldenummer: 03001566.3
(22) Anmeldetag: 23.01.2003
(51) Int. Cl.: B60H 1/00

(54) **Luftmischvorrichtung für eine Fahrzeugklimatisierungseinrichtung**
Air mixing device for an air-conditioning system in a vehicle
Dispositif de mélange d'air d'une installation de climatisation pour un véhicule

(30) Priorität: 06.02.2002 DE 10204735
(43) Veröffentlichungstag der Anmeldung: 13.08.2003
(73) Patentinhaber: Behr GmbH & Co. KG, 70469 Stuttgart (DE)
(72) Erfinder: Voigt, Klaus, 74321 Bietigheim-Bissingen (DE)
(74) Vertreter: Grauel, Andreas

(56) Entgegenhaltungen:
- DE-A- 19 753 617
- FR-A- 1 359 909
- US-A- 4 683 913
- US-A- 5 399 120

## Beschreibung

Die vorliegende Erfindung betrifft eine Luftmischvorrichtung für eine Klimatisierungseinrichtung eines Fahrzeugs, insbesondere eines Kraftfahrzeugs.

Mit Hilfe einer Klimatisierungseinrichtung kann eine temperierte und insbesondere eine getrocknete Luftströmung in einen Fahrzeuginnenraum eingeleitet werden. Um die zugeführte Luft zu temperieren, wird üblicherweise ein Kaltluftstrom in geeigneter Weise mit einem Warmluftstrom vermischt, um über das Mischungsverhältnis die gewünschte Lufttemperatur einzustellen. Die Mischung der Kaltluft mit der Warmluft erfolgt dabei in einer Luftmischvorrichtung der eingangs genannten Art, die üblicherweise einen Bestandteil der Klimatisierungseinrichtung bildet. Um das gewünschte Mischungsverhältnis zwischen Warmluft und Kaltluft einzustellen, können verschiedene Steuerorgane vorgesehen sein, mit denen die Verbindungen eines Warmluftkanals und eines Kaltluftkanals mit einem Mischraum in geeigneter Weise gesteuert werden können.

Die DE -A- 197 53 617 zeigt eine Vorrichtung zur Heizung, Belüftung und/oder Klimatisierung mit einem Außenlufteinlass und einem Umlufteinlass.

Die vorliegende Erfindung beschäftigt sich mit dem Problem, für eine Luftmischvorrichtung der eingangs genannten Art eine verbesserte Ausführungsform anzugeben, die insbesondere einen besonders kompakten Aufbau besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, an einem einzigen Steuerorgan eine axiale Steuerfläche zur Steuerung einer axialen Zuströmöffnung sowie eine radiale Steuerfläche zur Steuerung einer radialen Zuströmöffnung auszubilden, wobei das Steuerorgan um eine Schwenkachse drehverstellbar ist, die senkrecht zur axialen Steuerfläche verläuft. Das Steuerorgan bildet somit eine Kombination aus einer Schwenkscheibe (axiale Steuerfläche) und einem Drehschieber (radiale Steuerfläche). Für bestimmte Bauformen ist es dadurch möglich, eine axiale Zuströmöffnung sowie eine radiale Zuströmöffnung mit einem einzigen Steuerorgan zu steuern, um die zugeführten Strömungen in entsprechender Weise zu mischen. Für einen derartigen Anwendungsfall baut die erfindungsgemäße Luftmischvorrichtung besonders kompakt und besitzt darüber hinaus einen einfachen und preiswerten Aufbau.

Erfindungsgemäß schließt die radiale Steuerfläche, die z.B. im wesentlichen die Form eines Mantels eines Halbzylinders oder Halbkegelstumpfs aufweist, radial außen an die axiale Steuerfläche an, die im wesentlichen die Form einer Halbkreisscheibe aufweist. Durch diese Bauweise ist das Steuerorgan besonders kompakt und geometrisch einfach aufgebaut. Das Steuerorgan kann als Vollkörper oder als Schalenkörper ausgebildet sein, wobei die Schalenkörper-Variante relativ preiswert realisierbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,

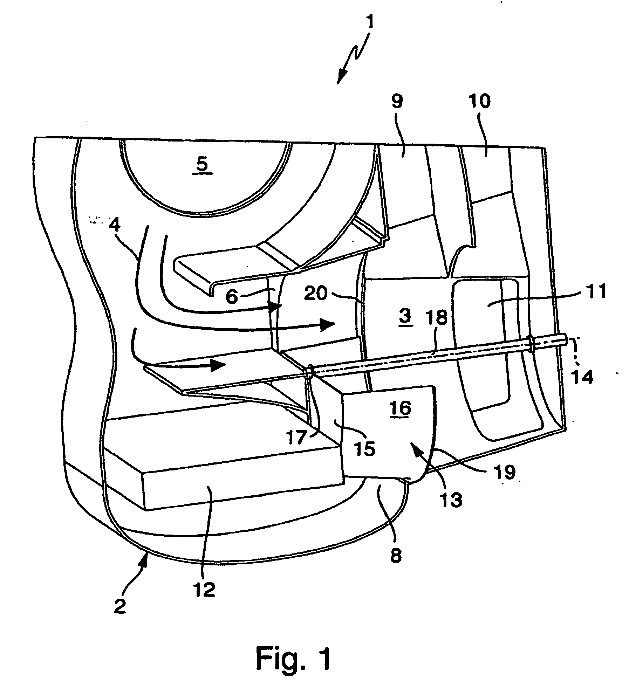

- **Fig. 1 bis 3**: teilweise geschnittene, dreidimensionale Ansichten auf eine Luftmischvorrichtung nach der Erfindung bei unterschiedlichen Stellungen eines Steuerorgans.

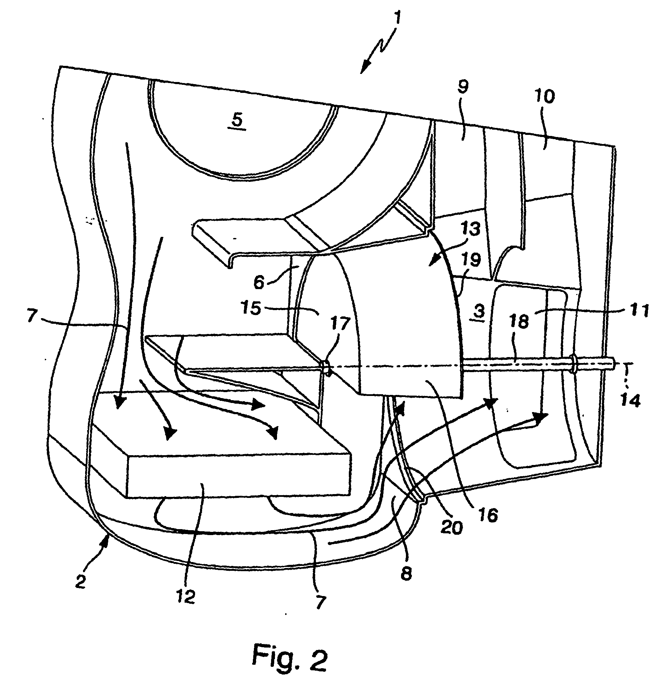

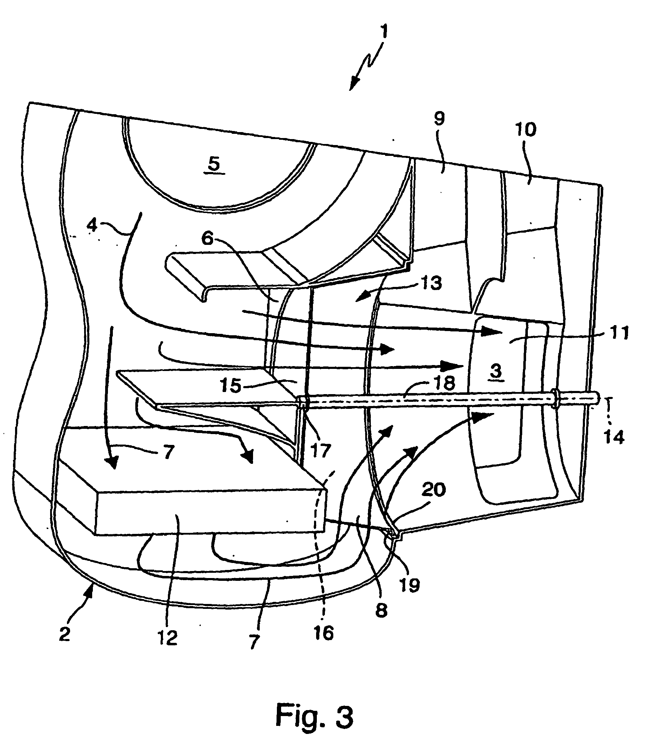

Entsprechend den Fig. 1 bis 3 umfaßt eine erfindungsgemäße Luftmischvorrichtung 1 ein Gehäuse 2, das einen Mischraum 3 enthält. Im Gehäuse 2 ist ein erster Strömungspfad oder -weg 4 ausgebildet, der in den Fig. 1 und 3 durch Strömungspfeile symbolisiert ist und von einem Lufteinlaß 5 durch eine erste Zuströmöffnung 6 zum Mischraum 3 führt. Des weiteren enthält das Gehäuse 2 einen zweiten Strömungspfad oder -weg 7, der in den Fig. 2 und 3 durch entsprechende Strömungspfeile symbolisiert ist und vom Lufteinlaß 5 durch eine zweite Zuströmöffnung 8 zum Mischraum 3 führt. Vom Mischraum 3 gehen verschiedene Abströmkanäle 9, 10, 11 aus, die vom Mischraum 3 z.B. zu nicht gezeigten Austrittsdüsen einer Klimatisierungseinrichtung eines Fahrzeugs, insbesondere eines Kraftfahrzeugs, führen, mit deren Hilfe klimatisierte Luft in einen Fahrzeuginnenraum einblasbar ist. Die Luftmischvorrichtung 1 bildet dabei einen Bestandteil dieser Klimatisierungseinrichtung.

Bei der hier gezeigten Ausführungsform ist im zweiten Strömungspfad 7 ein durchströmbarer Heizkörper 12 angeordnet, der bei seiner Durchströmung an die ihn durchströmende Luftströmung Wärme überträgt. Die dem zweiten Strömungspfad 7 folgende Luftströmung bildet somit eine Warmluftströmung, während die dem ersten Strömungspfad 4 folgende Luftströmung den Heizkörper 12 umgeht und somit eine Kaltluftströmung bildet.

Im Gehäuse 2 ist ein Steuerorgan 13 um eine Schwenkachse 14 drehverstellbar gelagert. Dieses Steuerorgan 13 ist hier in Form eines in Längsrichtung halbierten, axial offenen Topfs ausgebildet und besitzt demnach einen halben Boden 15 in Form einer Halbkreisscheibe sowie einen radial außen daran anschließenden Halbmantel 16 in Form eines Halbzylinders oder Halbkegelstumpfs. Dabei bildet der Halbboden 15 eine axiale Steuerfläche des Steuerorgans 13, die im folgenden ebenfalls mit 15 bezeichnet wird. Diese axiale Steuerfläche 15 erstreckt sich somit senkrecht zur Schwenkachse 14 des Steuerorgans 13 und ist der ersten Zuströmöffnung 6 zugeordnet, die bezüglich des drehbaren Steuerorgans 13 axial ausgerichtet ist. Das heißt, die Zuströmrichtung in der ersten Zuströmöffnung 6 verläuft im wesentlichen parallel zur Schwenkachse 14. Dementsprechend wird die erste Zuströmöffnung 6 im folgenden auch als axiale Zuströmöffnung 6 bezeichnet. In entsprechender Weise bildet der Halbmantel 16 eine radiale Steuerfläche, die im folgenden ebenfalls mit 16 bezeichnet wird. Diese radiale Steuerfläche 16 ist von der Schwenkachse 14 radial beabstandet und verläuft im wesentlichen in deren Richtung, das heißt, die radiale Steuerfläche 16 erstreckt sich parallel, (sofern es sich um den Halbmantel 16 eines Halbzylinders handelt) oder im wesentlichen parallel (sofern es sich um den Halbmantel 16 eines Halbkegelstumpfes handelt) zur Schwenkachse 14 sowie in Umfangsrichtung des jeweiligen Halbzylinders bzw. Halbkegelstumpfs. Die radiale Steuerfläche 16 ist der zweiten Zuströmöffnung 8 zugeordnet, die im folgenden auch als radiale Zuströmöffnung 8 bezeichnet wird, da sie bezüglich des Steuerorgans 13 im wesentlichen radial angeordnet ist, mit der Folge, daß in der radialen Zuströmöffnung 8 die zugeführte Luftströmung bezüglich der Schwenkachse 14 im wesentlichen radial strömt.

Die axiale Steuerfläche 15 ist in ihrem Drehzentrum 17 an einer Antriebswelle 18 drehfest angebracht, die sich koaxial zur Schwenkachse 14 erstreckt und die im Gehäuse 2 drehbar gelagert ist. Die Antriebswelle 18 kann über einen geeigneten, hier nicht dargestellten Aktuator manuell und/oder motorisch angetrieben werden, um das Steuerorgan 13 drehend zu verstellen.

Die axiale Steuerfläche 15 und die radiale Steuerfläche 16 können als einteiliges Bauteil, insbesondere als Spritzgußbauteil, Blasteil, Vakuumziehteil oder Extrudierteil ausgebildet sein. Die angebrachte Antriebswelle 18 kann auch angeformt sein, so daß das Steuerorgan 13 einschließlich seiner Antriebswelle 18 ein einteiliges Bauteil bildet. Des weiteren kann - wie hier - eine Dichtlippe 19 am Steuerorgan 13 ausgebildet oder angeformt sein. Bei der hier gezeigten Ausführungsform ist eine halbkreisförmige Dichtlippe 19 an dem von der axialen Steuerfläche 15 abgewandten axialen Ende der radialen Steuerfläche 16 ausgebildet. Diese Dichtlippe 19 ist in einer entsprechenden Führung 20 des Gehäuses 2 geführt und gewährleistet dadurch eine präzise Verstellbarkeit des Steuerorgans 13 im Gehäuse 2.

Die axiale Steuerfläche 15 ist der axialen Zuströmöffnung 6 zugeordnet, das heißt, in Abhängigkeit der Drehlage des Steuerorgans 13 verschließt die axiale Steuerfläche 15 mehr oder weniger die Verbindung der axialen Zuströmöffnung 6 mit dem Mischraum 3 und reguliert dadurch die über den ersten Strömungsweg 4 durch die axiale Zuströmöffnung 6 in den Mischraum 3 eintretende Luftmenge. In entsprechender Weise ist die radiale Steuerfläche 16 der radialen Zuströmöffnung 8 zugeordnet, so daß die radiale Steuerfläche 16 in Abhängigkeit der Drehlage des Steuerorgans 13 die radiale Zuströmöffnung 8 mehr oder weniger verschließt. Das bedeutet, daß die radiale Steuerfläche 16 in Abhängigkeit ihrer Drehstellung die Verbindung zwischen der radialen Zuströmöffnung 8 und dem Mischraum 3 und somit den Volumenstrom im zweiten Strömungsweg 7 durch die radiale Zuströmöffnung 8 in den Mischraum 3 steuert.

In Fig. 1 nimmt das Steuerorgan 13 eine erste Stellung ein, in der die axiale Steuerfläche 15 die axiale Zuströmöffnung 6 maximal öffnet, während die radiale Steuerfläche 16 die radiale Zuströmöffnung 8 maximal, hier vollständig schließt. In dieser ersten Stellung ist somit nur der erste Strömungsweg 4, also hier der Kaltluftstrom aktiv. Dementsprechend wird der Mischraum 3 in der ersten Stellung nur mit Kaltluft versorgt.

Gemäß Fig. 2 ist das Steuerorgan 13 in eine zweite Stellung überführbar, in der die axiale Steuerfläche 15 die axiale Zuströmöffnung 6 maximal, hier vollständig schließt, während die radiale Steuerfläche 16, die radiale Zuströmöffnung 8 maximal öffnet. In dieser zweiten Stellung ist somit lediglich der zweite Strömungsweg 7 aktiviert, so daß ausschließlich die den Heizkörper 12 durchströmende Luft, also Warmluft in den Mischraum 3 eintritt.

Um das Steuerorgan 13 zwischen seinen beiden Stellungen gemäß den Fig. 1 und 2 zu verstellen, wird das Drehorgan 13 um seine Schwenkachse 14 um 180° gedreht. Zwischen diesen Stellungen gemäß den Fig. 1 und 2 kann das Steuerorgan 13 beliebige Zwischenstellungen oder Mischstellungen einnehmen, von denen eine exemplarisch in Fig. 3 dargestellt ist, bei der das Drehorgan 13 um 90° gegenüber den beiden anderen Stellungen gedreht ist. In dieser Mischstellung schließt die axiale Steuerfläche 15 die axiale Zuströmöffnung 6 nur teilweise, hier zur Hälfte, so daß mehr oder weniger Kaltluft durch die axiale Zuströmöffnung 6 in den Mischraum 3 eintreten kann. In entsprechender Weise kann in dieser Mischstellung auch die radiale Steuerfläche 16 die radiale Zuströmöffnung 8 nur teilweise, hier hälftig, verschließen, so daß auch durch die radiale Zuströmöffnung 8 eine entsprechende Warmluftströmung in den Mischraum eintreten kann. Demzufolge kommt es im Mischraum 3 zu einer Durchmischung der beiden Strömungen, wodurch eine gewünschte Temperatur für das Luftgemisch eingestellt werden kann.

In dieser Mischstellung gemäß Fig. 3 sind beide Strömungswege 4 und 7 aktiviert, so daß sich die über die Einlaßöffnung 5 zugeführte Luftströmung, die beispielsweise mittels eines entsprechenden, hier nicht gezeigten Gebläses erzeugt wird, in Abhängigkeit der Drehlage des Steuerorgans 13 auf die beiden Zuströmöffnungen 6 und 8 aufteilt.

Wie aus den Fig. 1 bis 3 hervorgeht, kann mit Hilfe des erfindungsgemäß ausgestalteten Steuerorgans 13 eine besonders kompakte Bauweise für die Luftmischvorrichtung 1 erzielt werden.

Bei der hier gezeigten Ausführungsform ist das Steuerorgan 13 zweckmäßig so gelagert, daß es beliebig off in derselben Drehrichtung drehbar ist. Bei der hier gezeigten Ausführungsform ist das Steuerorgan 13 mit seinen Steuerflächen 15, 16 als relativ dünnwandiger Schalenkörper ausgebildet, der sich durch ein besonders niedriges Gewicht auszeichnet. Grundsätzlich ist es auch möglich, das Steuerorgan 13 als Vollkörper auszubilden, der die Steuerflächen 15, 16 besitzt.

Obwohl bei der hier gezeigten Ausführungsform das Steuerorgan 13 um 180° gedreht werden muß, um die beiden Zuströmöffnungen 6 und 8 maximal zu sperren bzw. maximal zu öffnen, kann es bei einer anderen Ausführungsform auch zweckmäßig sein, das Steuerorgan 13 so auszugestalten und die Zuströmöffnungen 6 und 8 so anzuordnen, daß bereits ein kleinerer Drehwinkel ausreicht, diese beiden Extremstellungen zu erreichen.

### Bezugszeichenliste

- 1: Luftmischvorrichtung
- 2: Gehäuse
- 3: Mischraum
- 4: erster Strömungsweg/Kaltluft
- 5: Einlaßöffnung
- 6: erste Zuströmöffnung/axiate Zuströmöffnung
- 7: zweiter Strömungsweg/Warmluft
- 8: zweite Zuströmöffnung/radiale Zuströmöffnung
- 9: Abströmkanal
- 10: Abströmkanal
- 11: Abströmkanal
- 12: Heizgerät
- 13: Steuerorgan
- 14: Schwenkachse von 13
- 15: Halbboden/axiale Steuerfläche von 13
- 16: Halbmantel/radiale Steuerfläche von 13
- 17: Zentrum von 15
- 18: Antriebswelle
- 19: Dichtlippe von 13
- 20: Führung von 13 an/in 2

## Patentansprüche

1. Luftmischvorrichtung für eine Klimatisierungseinrichtung eines Fahrzeugs, insbesondere eines Kraftfahrzeugs, mit einem Steuerorgan (13),
- das um eine Schwenkachse (14) drehverstellbar gelagert ist,
- das eine axiale Steuerfläche (15) aufweist, die im Wesentlichen senkrecht zur Schwenkachse (14) verläuft, im Wesentlichen die Form einer Halbkreisscheibe aufweist und in Abhängigkeit der Drehlage des Steuerorgans (13) eine axiale Zuströmöffnung (6) zu einem Mischraum (3) öffnet, ganz oder teilweise verschließt,
- das eine radiale Steuerfläche (16) aufweist, die von der Schwenkachse (14) radial beabstandet ist, sich im Wesentlichen parallel zur Schwenkachse (14) erstreckt, im Wesentlichen die Form eines Mantels eines Halbzylinders oder Halbkegelstumpfs aufweist und in Abhängigkeit der Drehlage des Steuerorgans (13) eine radiale Zuströmöffhung (8) zu einem Mischraum (3) öffnet, ganz oder teilweise verschließt,
wobei das Steuerorgan (13) zwischen
- einer ersten Stellung, in der die axiale Steuerfläche (15) die axiale Zuströmöffnung (6) öffnet und die radiale Steuerfläche (16) die radiale Zuströmöffnung (8) schließt,
- über mindestens eine Mischstellung, in der die axiale Steuerfläche (15) die axiale Zuströmöffnung (6) mehr oder weniger öffnet und die radiale Steuerfläche (16) die radiale Zuströmöffnung (8) mehr oder weniger öffnet, und
- einer zweiten Stellung um die Schwenkachse (14) drehend verstellbar ist, in der die axiale Steuerfläche (15) die axiale Zuströmöffnung (6) schließt und die radiale Steuerfläche (16) die radiale Zuströmöffnung (8) öffnet.

2. Luftmischvorrichtung nach Anspruch 1, **dadurch gekennzeichnet, dass** die radiale Steuerfläche (16) radial außen an die axiale Steuerfläche (15) anschließt.

3. Luftmischvorrichtung nach einem der Ansprüche 1 bis 2, **dadurch gekennzeichnet, dass** das Steuerorgan (13) als Vollkörper oder als Schalenkörper ausgebildet ist.

4. Luftmischvorrichtung nach einem der Ansprüche 1 bis 3, **dadurch gekennzeichnet, dass** am Steuerorgan (13) wenigstens eine Dichtlippe (19) ausgebildet oder angeformt ist.

5. Luftmischvorrichtung nach einem der Ansprüche 1 bis 4, **dadurch gekennzeichnet, dass** die Zuströmöffnungen (6, 8) so angeordnet sind, daß das Steuerorgan (13) um seine Schwenkachse (14) etwa um 180° gedreht werden muß, um zwischen seiner ersten Stellung und seiner zweiten Stellung überführt zu werden.

6. Luftmischvorrichtung nach einem der Ansprüche 1 bis 5, **dadurch gekennzeichnet, dass** das Steuerorgan (13) über seine axiale Steuerfläche (15) drehfest mit einer Antriebswelle (18) verbunden ist, die koaxial zur Schwenkachse (14) verläuft und in einem Gehäuse (2) gelagert ist, das die Zuströmöffnungen (6, 8) und den Mischraum (3) enthält.

## Claims

1. Blend air device for an air conditioning system of a vehicle, in particular a motor vehicle, with a control element (13)
- which is mounted for rotary adjustment about a pivot axis (14),
- which features an axial control surface (15) extending substantially at right angles to the pivot axis (14), essentially having the shape of a semicircular disk and opening or fully or partially closing an axial inlet (6) into a blend chamber (3) in dependence on the rotary position of the control element (13),
- which features a radial control surface (16) located at a radial distance from the pivot axis (14), extending substantially parallel to the pivot axis (14), essentially having the shape of the circumferential surface of a semicylinder of half of a truncated cone and opening or fully or partially closing a radial inlet (8) into a blend chamber (3) in dependence on the rotary position of the control element (13),
wherein the control element (13) is adjustable about the pivot axis (14)
- between a first position, in which the axial control surface (15) opens the axial inlet (6) and the radial control surface (16) closes the radial inlet (8),
- at least one blend position, in which the axial control surface (15) opens the axial inlet (6) to a greater or lesser degree and the radial control surface (16) opens the radial inlet (8) to a greater or lesser degree, and
- a second position, in which the axial control surface (15) closes the axial inlet (6) and the radial control surface (16) opens the radial inlet (8).

2. Blend air device according to claim 2, **characterised in that** the radial control surface (16) adjoins the axial control surface (15) radially outside.

3. Blend air device according to claim 1 or 2, **characterised in that** the control element (13) is designed as a massive body or as a shell body.

4. Blend air device according to any of claims 1 to 3, **characterised in that** at least one sealing lip (19) is mounted on or integrated into the control element (13).

5. Blend air device according to any of claims 1 to 4, **characterised in that** the inlets (6, 8) are so arranged that the control element (13) has to be rotated about its pivot axis (14) by approximately 180° to move between its first and second positions.

6. Blend air device according to any of claims 1 to 5, **characterised in that** the control element (13) is, via its axial control surface (15), non-rotatably connected to a drive shaft (18) coaxial with the pivot axis (14) and mounted in a housing (2) which accommodates the inlets (6, 8) and the blend chamber (3).

## Revendications

1. Dispositif de mélange d'air pour une installation de climatisation d'un véhicule, en particulier d'un véhicule automobile, avec un organe de commande (13),
- qui est logé de façon réglable en rotation autour d'un axe pivotant (14),
- qui présente une surface de commande (15) axiale, qui est sensiblement perpendiculaire à l'axe de pivotement (14), présente sensiblement la forme d'un disque semi-circulaire et ouvre, ferme complètement ou partiellement une ouverture d'arrivée (6) axiale à une chambre de mélange (3) en fonction de la position de rotation de l'organe de commande (13),
- qui présente une surface de commande (16) radiale, laquelle est espacée radialement de l'axe de pivotement (14), s'étend sensiblement parallèlement à l'axe de pivotement (14), présente sensiblement la forme d'une enveloppe d'un demi-cylindre ou d'un demi-cône tronqué et ouvre, ferme complètement ou partiellement une ouverture d'entrée (8) radiale pour une chambre de mélange (3) en fonction de la position de rotation de l'organe de commande (13),
- l'organe de commande (13) pouvant être réglé de façon rotative autour de l'axe de pivotement (14) entre une première position, dans laquelle la surface de commande (15) axiale ouvre l'ouverture d'entrée (6) axiale et la surface de commande (16) radiale ferme l'ouverture d'arrivée (8) radiale, en passant par au moins une position de mélange, dans laquelle la surface de commande (15) axiale ouvre plus ou moins l'ouverture d'arrivée (6) axiale et la surface de commande (16) radiale ouvre plus ou moins l'ouverture d'arrivée (8) radiale, et une seconde position, dans laquelle la surface de commande (15) axiale ferme l'ouverture d'entrée (6) axiale et la surface de commande (16) radiale ouvre l'ouverture d'entrée (8) radiale.

2. Dispositif de mélange d'air selon la revendication 1, **caractérisé en ce que** la surface de commande (16) radiale se raccorde radialement à l'extérieur à la surface de commande (15) axiale.

3. Dispositif de mélange d'air selon l'une quelconque des revendications 1 à 2, **caractérisé en ce que** l'organe de commande (13) est conçu comme corps plein ou comme corps de coque.

4. Dispositif de mélange d'air selon l'une quelconque des revendications 1 à 3, **caractérisé en ce qu'**au moins une lèvre d'étanchéité (19) est réalisée ou formée sur l'organe de commande (13).

5. Dispositif de mélange d'air selon l'une quelconque des revendications 1 à 4, **caractérisé en ce que** les ouvertures d'arrivée (6, 8) sont disposées de telle sorte que l'organe de commande (13) doit être tourné d'environ 180° autour de son axe de pivotement (14), afin d'être transféré entre sa première position et sa seconde position.

6. Dispositif de mélange d'air selon l'une quelconque des revendications 1 à 5, **caractérisé en ce que** l'organe de commande (13) est relié au moyen de sa surface de commande (15) axiale de façon solidaire en rotation à un arbre d'entraînement (18), qui est agencé sur le même axe que l'axe de pivotement (14) et est logé dans un boîtier (2) qui contient les ouvertures d'arrivée (6, 8) et l'espace de mélange (3).
